# EUROPEAN PATENT APPLICATION

(11) **EP 2 811 556 A1**
(43) Date of publication of application: **10.12.2014**
(21) Application number: 14754072.8
(22) Date of filing: 14.01.2014
(51) Int. Cl.: H01M 4/50, C01G 45/02, C25B 1/21, H01M 4/06, H01M 6/08

(54) **MANGANESE DIOXIDE, AND ALKALINE DRY CELL USING SAME**

(30) Priority: 19.02.2013 JP 2013029607
(71) Applicant: Panasonic Intellectual Property Management Co., Ltd., Osaka 540-6207 (JP)
(72) Inventor: UZUKA, Shunsuke, Osaka 540-6207 (JP); YAMAMOTO, Kenji, Osaka 540-6207 (JP)
(74) Representative: TBK
(86) International application number: PCT/JP2014/000119
(87) International publication number: WO 2014/129104

(57) **Abstract**

Disclosed is manganese dioxide having a peak intensity ratio between a peak intensity I_{β} in a vicinity of 525 cm⁻¹ and a peak intensity I_{y} in a vicinity of 580 cm⁻¹: I_{β}/I_{γ} of 0.62 or less, when measured by Raman scattering spectroscopy. Also disclosed is an alkaline dry battery comprising: a cylindrical positive electrode having a hollow, the positive electrode including the foregoing manganese dioxide; a gelled negative electrode including a negative electrode active material filled in the hollow of the positive electrode; a separator disposed between the positive electrode and the gelled negative electrode; a negative electrode current collector inserted in the gelled negative electrode; a negative terminal plate electrically connected to the negative electrode current collector; and an electrolyte.

## Description

### [Technical Field]

The present invention relates to manganese dioxide, particularly to manganese dioxide used as a positive electrode active material for an alkaline dry battery.

### [Background Art]

Alkaline dry batteries are used in various devices. In recent years, in association with increase of load in devices which use an alkaline dry battery, there has been a demand for alkaline dry batteries having excellent high-load discharge characteristics.

The positive electrode in an alkaline dry battery usually includes a mixture (positive electrode material mixture) containing: powder of electrolytic manganese dioxide (hereafter, may simply be referred to as manganese dioxide); powder of graphite; and an alkaline electrolyte. The positive electrode material mixture is molded under high pressure into a cylindrical pellet (positive electrode pellet) having a hollow, and is included in the alkaline dry battery.

In an electrolytic manganese dioxide, there may be structural defects caused by microtwining (turnaround in crystal growth) which occurs during crystal growth. Such structural defects are regarded as being due to Mn vacancies and protons included to compensate charge for the Mn vacancies; and are known to affect the high-load discharge performance of an alkaline dry battery.

The amount of structural defects due to microtwining varies depending on electrolysis conditions such as electrolyte concentration and electrolytic current density. Therefore, from the past, efforts have been made to increase the structural defects by making various changes in electrolysis conditions. For example, there was a proposal for a technique in improving the high-load discharge performance, by using an electrolytic manganese dioxide of which the weight would be reduced by 2.7 wt% or more at 200 to 400ºC during heating, thereby causing increase of internal defects in the electrolytic manganese dioxide and consequently facilitating mobility of hydrogen ions therein (c.f., Patent Literature 1).

### [Citation List]

### [Patent Literature]

[Patent Literature 1] Japanese Laid-Open Patent Publication No. 2004-186127

### [Summary of Invention]

### [Technical Problem]

As in Patent Literature 1, when the high-load discharge performance is improved by increasing internal defects in manganese dioxide, crystallinity of the manganese dioxide lowers in association with the increased amount of the defects in the manganese dioxide. Thus, the particles obtained are non-uniform in shape; and causes lowering of the filling ability of the positive electrode material mixture in forming the positive electrode pellet. That is, the density or filling amount of the positive electrode active material lowers, causing difficulty in obtaining an alkaline dry battery with a high energy density. In improving the performance of an alkaline dry battery, there is importance in how to fill as much manganese dioxide as possible in a battery with a certain volume.

In view of the foregoing, the present invention aims to provide an alkaline dry battery which has a high energy density and delivers an excellent high-load discharge performance; and to also provide manganese dioxide for use in such an alkaline dry battery.

### [Solution to Problem]

That is, the present invention relates to manganese dioxide of which, when measured by Raman scattering spectroscopy, a peak intensity ratio between a peak intensity I_{β} in the vicinity of 525 cm⁻¹ and a peak intensity I_{γ} in the vicinity of 580 cm⁻¹: I_{β}/I_{γ} is 0.62 or less. This enables obtaining an alkaline dry battery which has a high energy density and delivers an excellent high-load discharge performance.

The peak intensity ratio I_{β}/I_{γ} is preferably 0.35 to 0.58. This enables further improvement in the high-load discharge performance.

In the particle size distribution of the manganese dioxide, the proportion of the particles with a particle size of 0.5 µm or less is preferably 5 vol% or less and further preferably 1.2 to 3.8 vol%. This is because control of the peak intensity ratio I_{β}/I_{γ} becomes easier as a result.

The present invention also relates to an alkaline dry battery comprising: a cylindrical positive electrode having a hollow, the positive electrode including the manganese dioxide as a positive electrode active material; a gelled negative electrode including a negative electrode active material filled in the hollow of the positive electrode; a separator disposed between the positive electrode and the gelled negative electrode; a negative electrode current collector inserted in the gelled negative electrode; a negative terminal plate electrically connected to the negative electrode current collector; and an electrolyte.

### [Advantageous Effect of Invention]

According to the present invention, there is provided an alkaline dry battery having a high energy density and being capable of an excellent high-load discharge performance, made possible by controlling the crystal structure of manganese dioxide used as the positive electrode active material.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

Fig. 1 is a graph showing Raman scattering spectrums of manganese dioxide in the prior art and that of manganese dioxide according to one embodiment of the present invention.
Fig. 2 is a partial sectional front view of an AA alkaline dry battery according to one embodiment of the present invention.

### [Description of Embodiments]

Manganese dioxide is typically a mixed crystal comprising a Ramsdellite-structured phase and a Pyrolusite-structured phase (hereafter, referred to as β phase). The β phase is known to be inactive due to having a very stable crystal structure. Thus far, it has been considered that the respective proportions of the Ramsdellite-structured phase and the Pyrolusite-structured phase (β phase) do not change much. Therefore, in the prior art, efforts have been made to increase the proportion of an Akhtenskit-structured phase (hereafter, referred to as ε phase) produced by further activating a Ramsdellite structure that is originally an active crystal structure. The method disclosed in Patent Literature 1 is one such example. However, as mentioned above, increase of the proportion of the ε phase would cause crystallinity of manganese dioxide to lower and thus unintentionally cause decrease in the filling amount of the positive electrode material mixture.

However, the present inventors found that the respective proportions of the Ramsdellite structure and the Pyrolusite structure (β phase) changed easily due to various factors in the actual production of electrolytic manganese dioxide. For example, the inactive β phase increases due to factors such as inevitable fluctuation in electrolytic current and localized potential rise due to cracks formed on the surface of manganese dioxide deposited on an anode in an electrolytic bath.

Regarding the respective proportions of the Ramsdellite structure and the Pyrolusite structure (β phase), the present inventors also found that those of the manganese dioxide deposited on the anode in the electrolytic bath, differed significantly from those of fine particles produced on the surface of the manganese oxide and inside the manganese oxide. That is, the fine particles included the Pyrolusite structure (β phase) in a larger proportion than usual, and the manganese dioxide deposited on the anode included a phase having the Ramsdellite structure in a larger proportion than usual.

That is, for example, use of the manganese dioxide having a small proportion of the inactive β phase and a large proportion of the relatively highly active Ramsdellite structure, obtained by removing the fine particles, would enable improvement in high-load discharge performance of the resultant alkaline dry battery without increasing the ε phase having low crystallinity. Moreover, in the present invention, the respective proportions of the Ramsdellite structure and the Pyrolusite structure (β phase) are made to vary, and therefore, crystallinity of the manganese dioxide particles themselves does not change much. Therefore, it is possible to improve the high-load discharge performance of the resultant alkaline dry battery without lowering the energy density thereof.

That is, the manganese dioxide of the present invention, when measured by Raman scattering spectroscopy, has a peak intensity ratio between a peak intensity I_{β} in the vicinity of 525 cm⁻¹ and a peak intensity I_{γ} in the vicinity of 580 cm⁻¹: I_{β}/I_{γ} of 0.62 or less.

Due to use of the manganese dioxide with the peak intensity ratio I_{β}/I_{γ} of 0.62 or less, it is possible to obtain an alkaline dry battery which has a high energy density and delivers excellent high-load discharge performance. The peak intensity ratio I_{β}/I_{γ} is preferably 0.35 to 0.58, and further preferably 0.35 to 0.53 or 0.35 to 0.46. When the peak intensity ratio is in this range, an effect of further improvement in high-load discharge performance is obtained. Note that the peak intensity ratio I_{β}/I_{γ} is calculated from peak heights, and not from a ratio between peak areas.

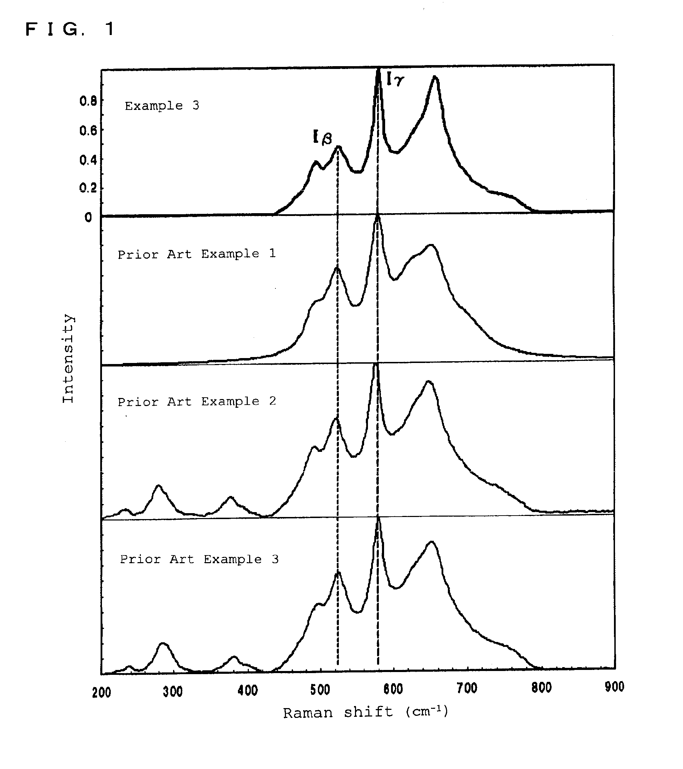

Fig. 1 shows Raman scattering spectrums of three kinds of electrolytic manganese dioxides (Prior Art Example 1: HH-TF grade, available from Tosoh Corporation; Prior Art Example 2: MS10 grade, available from Quintal S.A.; Prior Art Example 3: grade for batteries in general, available from Cegasa International) that are currently industrially in production and distribution. The vertical axis in Fig. 1 indicates relative intensity when the peak intensity I_{γ} in the vicinity of 580 cm⁻¹ is 1.0.

As shown in Fig. 1, in the Raman scattering spectrums of the manganese dioxides, peaks are observed in the vicinities of 525 cm⁻¹, 580 cm⁻¹, and 650 cm⁻¹, respectively. These observed peaks comprise peaks attributed to phases of different crystal structures. In the vicinities of 525 cm⁻¹, 580 cm⁻¹,and 650 cm⁻¹,there are peaks based on the Ramsdellite-structured phase. In the vicinities of 525 cm⁻¹ and 650 cm⁻¹,there are peaks based on the Pyrolusite-structured phase (β phase). That is, the peak in the vicinity of 580 cm⁻¹ is based only on the Ramsdellite-structured phase. Moreover, regarding the peaks in the vicinities of 525 cm⁻¹ and 650 cm⁻¹ that are based on the Pyrolusite-structured phase (β phase), the peak in the vicinity of 525 cm⁻¹ is sharper than the peak in the vicinity of 650 cm⁻¹.

Therefore, in present invention, the peak intensity ratio I_{β}/I_{γ} is defined as that between the peak intensity I_{β} of the peak in the vicinity of 525 cm⁻¹ based on the Pyrolusite-structured phase (β phase) and the peak intensity I_{γ} of the peak in the vicinity of 580 cm⁻¹ based on the Ramsdellite-structured phase. Here, "vicinity" with regards to the peak position in the Raman scattering spectrum means ±15 cm⁻¹ to the wavenumber. Note that the respective peak intensity ratios I_{β}/I_{γ} in Prior Art Examples 1 to 3 are 0.63 to 0.64.

### <Measurement of peak intensity by Raman scattering spectroscopy>

The peak intensity ratio I_{β}/I_{γ} can be obtained, for example, in the following manner.

First, about 100 mg of manganese dioxide serving as a sample is put in a tablet forming machine with an inner diameter of 5 mm, and then pressed with a pressure of about 100 kgf/cm², thereby to produce a pellet. Using a Raman scattering spectrometer (e.g., NRS-5100, available from JASCO Corporation), silicon metal is measured before the sample is measured, and the wavenumber is calibrated so that a peak is observed at 520 cm⁻¹. Thereafter, the sample (pellet) is set and measured 5 times, the conditions per measurement being a laser wavelength of 532 nm, a laser output of about 5 mW, use of an objective lens with a magnifying power of 20x, laser irradiation for 120 seconds, and calculation of 2 accumulations. Then, using the average spectrum obtained from the measurements, peak intensities are obtained. Lastly, the peak intensity ratio I_{β}/I_{γ} between the peak intensity I_{β} in the vicinity of 525 cm⁻¹ and the peak intensity I_{γ} in the vicinity of 580 cm⁻¹ is calculated.

In the case where the manganese dioxide is taken out of the alkaline dry battery for peak intensity measurement, the following is carried out. That is, if the positive electrode taken out of the alkaline dry battery is directly subjected to Raman scattering spectroscopy, the alkaline electrolyte in the positive electrode may hinder the measurement. Therefore, the alkaline electrolyte is removed. Moreover, if the positive electrode is dispersed in water and then passed through a paper filter, fine powder would be lost. Therefore, dealkalization is carried out using, for example, a Visking tube.

Specifically, about 100 mg of the positive electrode taken out of the alkaline dry battery and 5 ml of water are sealed in a Visking tube, and then the Visking tube is immersed in flowing water. After the pH of the water used for immersion becomes neutral, the content in the Visking tube is transferred to a petri dish, and then dried with a drier set to a temperature lower than 100ºC. After the dried product is crumbled with a mortar and pestle, Raman scattering spectroscopy is carried out as the foregoing.

Due to use of the manganese dioxide with the peak intensity ratio I_{β}/I_{γ} of 0.62 or less calculated in the foregoing manner, it is possible to improve the high-load discharge performance of the resultant alkaline dry battery, even without increasing the amount of structural defects in the crystal by microtwining, that is, even without changing the Ramsdellite-structured phase to the ε phase. Thus, it is possible to suppress decrease in the filling amount of the positive electrode material mixture that is caused by lowering of the crystallinity of the manganese dioxide. For example, the density of the manganese dioxide in the positive electrode pellet is one of the parameters influenced by the crystallinity of the manganese dioxide. In the present invention, the density of the manganese dioxide in the positive electrode pellet in an AA battery can be 2.7 to 3.2 g per 1 cm³. This is comparable to the respective densities in Prior Art Examples 1 to 3 in which the respective peak intensity ratios I_{β}/I_{γ} are 0.63 to 0.64.

From their finding that the crystal structure of the fine particles primarily included the β phase, the present inventors also found that the peak intensity ratio I_{β}/I_{γ} can be easily controlled by controlling the particle size of the manganese dioxide.

Therefore, the present inventors produced various kinds of manganese dioxides as below and conducted a study, aiming to study the relation between the size of the particles included in the manganese dioxide and the peak intensity ratio I_{β}/I_{γ} between the peak intensity I_{β} in the vicinity of 525 cm⁻¹ and the peak intensity I_{γ} in the vicinity of 580 cm⁻¹ in Raman scattering spectroscopy.

First, in an electrolytic bath having an internal volume of 20 liters and provided with a warming device, a titanium plate serving as an anode and a carbon plate serving as a cathode were positioned to face each other. The electrolytic bath prepared as above was also provided with a tube for feeding a manganese sulfate solution (electrolytic feed solution) into the electrolytic bath from above.

The temperature of the electrolytic bath was maintained at 95ºC. Into this electrolytic bath, the manganese sulfate solution was injected and the composition of the electrolyte was maintained such that the concentrations of bivalent manganese and sulfuric acid were 30 g/l and 100 g/l, respectively Under the above condition, an electrolysis process, i.e., a cycle comprising electrolysis at a current density of 90 A/m² for 55 minutes, followed by a rest time of 5 minutes, was repeated. The rest time was included in the electrolysis process in order to deliberately cause fluctuation in the electrolytic current.

After the foregoing electrolysis was carried out for 10 days, the titanium anode plate onto which manganese dioxide was deposited and attached was taken out and washed with pure water. Thereafter, the manganese dioxide on the titanium anode plate was separated from the plate. The mass of the manganese dioxide obtained was ground into coarse particles of about 10 mm, which were further ground into fine particles with a roller mill. Thereafter, the fine particles were further ground into finer particle with a mortar and pestle.

The powder of the manganese dioxide obtained as above was washed with pure water, and the fine particles washed off as a result were subjected to dry sieving, thereby to obtain powders of the manganese dioxide with maximum particle sizes of 10.0 µm, 1.0 µm, 0.7 µm, 0.5 µm, and 0.3 µm, respectively, for Reference Examples 1 to 5, respectively. For each of the manganese dioxide obtained, the peak intensity ratio I_{β}/I_{γ} was calculated by carrying out Raman scattering spectroscopy in the foregoing manner.

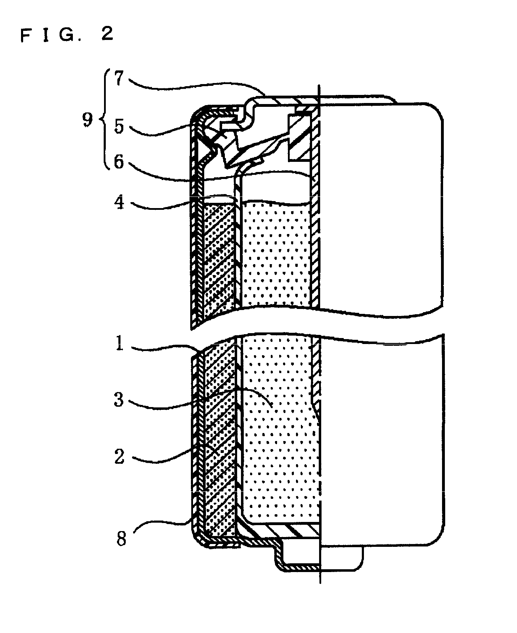

Furthermore, by using the powders of the manganese dioxide obtained above, AA alkaline dry batteries similar to the battery shown in Fig. 2 were produced, respectively, by carrying out Steps (2) to (4) described below; and were then evaluated on their high-load discharge characteristics by carrying out Evaluation (A) described below. The evaluation results are shown in Table 1. In this study, in orderto obtain evaluations on high-load discharge characteristics by using active materials of the same amount, adjustment was made to the pressing force in Step (2) below for producing the positive electrode pellet, such that 2 positive electrode pellets (corresponding to 1 battery) in total would include a filling amount of 10.00 g.

**[Table 1]**

| | Maximum particle size (µm) | Peak intensity ratio I_{β}/I_{γ} | High-load discharge performance (number of cycles) |
|---|---|---|---|
| Ref. Ex. 1 | 10.0 | 0.65 | 78 |
| Ref. Ex. 2 | 1.0 | 0.66 | 78 |
| Ref. Ex. 3 | 0.7 | 0.66 | 78 |
| Ref. Ex. 4 | 0.5 | 0.71 | 55 |
| Ref. Ex. 5 | 0.3 | 0.73 | 42 |

As evident from Reference Examples 1 to 3 in Table 1, the peak intensity ratios I_{β}/I_{γ} of the manganese dioxide with maximum particle sizes of 0.7 µm to 10.0 µm did not differ much from one another. In contrast, as evident from Reference Examples 4 and 5, when the maximum particle sizes of the manganese dioxide were 0.3 µm to 0.5 µm, the peak intensity ratios I_{β}/I_{γ} were larger. From this fact, it is presumed that the particles with a maximum particle size of 0.5 µm or less affect the peak intensity ratio I_{β}/I_{γ}. This is presumably due to the following reason. The manganese dioxide became inactive due to extreme imbalance in electric potential during electrolysis, and was therefore no longer able to be deposited. As a result, crystallites of the manganese dioxide were not able to grow sufficiently, and thus turned into fine particles.

Therefore, regarding the manganese dioxide of the present invention, the proportion of the particles with a particle size of 0.5 µm or less is preferably 5 vol% or less, and further preferably 1.2 to 3.8 vol%.

Regarding the foregoing Prior Art Examples 1 to 3, their proportions of the particles with a particle size of 0.5 µm or less are 3.2 vol%, 2.3 vol%, and 2.9 vol%, respectively However, their peak intensity ratios I_{β}/I_{γ} according to Raman scattering spectroscopy are 0.63 to 0.64. That is, the peak intensity ratio I_{β}/I_{γ} is not determined only by the proportion of the particles with a particle size of 0.5 µm or less.

In the study, the manganese dioxide was produced under the condition that electrolytic current was made to fluctuate during electrolysis. Therefore, the proportion of the β phase in the manganese dioxide obtained was presumably larger than that of manganese dioxide obtained in a typical manner; and also, the proportion of the Ramsdellite-structured phase and the proportion of the β phase presumably differed from one another depending on particle size.

As evident from Table 1, regarding the alkaline dry batteries which used the manganese dioxides of Reference Examples 4 and 5, the high-load discharge performances lowered significantly as the peak intensity ratios I_{β}/I_{γ} increased. That is, the high-load discharge performances lowered, presumably because the manganese dioxides included a large proportion of the inactive β phase.

Moreover, regarding the manganese dioxide of the present invention, the maximum particle size is preferably 100 to 160 µm, and the average particle size D50 is preferably 25 to 40 µm. If the maximum particle size and the average particle side D50 are in the above ranges, a sufficient amount of the manganese dioxide can be filled in the positive electrode pellet. Note that the average particle size D50 is a median diameter in a volume-based particle size distribution obtained by a laser diffraction particle size analyzer (the same applies hereafter).

### <Measurements of particle size and particle size distribution>

The particle size and the particles size distribution can be measured, for example, in the following manner.

One hundred and twenty ml of an aqueous solution of sodium hexametaphosphate at a concentration of 0.05 mass%, serving as a dispersion medium of manganese dioxide powder serving as a sample, is put into a laser diffraction/ scattering particle size distribution analyzer (e.g., LA-920, available from HORIBA, Ltd.). The dispersion medium is circulated in the analyzer at a maximum circulation rate; an ultrasonic wave oscillator installed in the analyzer is activated; about 20 mg of the manganese dioxide serving as the sample is put into the analyzer; scattering by ultrasonic wave is continued for 3 minutes; and then, measurements of the particle size and the particle size distribution are started. Measurements of the particle size and the particle size distribution are each carried out 3 times per sample. This is followed by calculations of their respective averages. These respective averages are referred to as the particle size and the particle size distribution.

In the case where the manganese dioxide is taken out of the alkaline dry battery for measuring the particle size and the particle size distribution, the following is carried out. Of the positive electrode pellets taken out of the alkaline dry battery that is disassembled, about 1 g is pulverized and then put into an aqueous solution of sodium polytungstate with its specific gravity adjusted to 3.0 to 4.0 g/cm³. Thereafter, the resultant is separated into manganese dioxide and graphite by centrifugation, thereby to obtain manganese dioxide powder. Then, as in the foregoing, the manganese dioxide powder obtained is dispersed in 120 ml of an aqueous solution of sodium hexametaphosphate at a concentration of 0.05 mass%, and then measured with a laser diffraction/scattering particle size distribution analyzer.

In the following, a detailed description will be given of an embodiment of the alkaline dry battery of the present invention, with reference to a drawing.

Fig. 2 is a partial sectional front view of an AA alkaline dry battery according to an embodiment of the present invention.

As shown in Fig. 2, the alkaline dry battery comprises:
a cylindrical positive electrode 2 having a hollow disposed in a bottom-closed cylindrical battery case 1;
a gelled negative electrode 3 including a negative electrode active material of zinc, zinc alloy powder, or the like filled in the hollow of the positive electrode 2; and
a separator 4 disposed between the positive electrode 2 and the gelled negative electrode 3.

The opening portion of the battery case 1 is sealed with a sealing unit 9 comprising a gasket 5 and a negative terminal plate 7 to which a negative electrode current collector 6 is connected. The outer surface of the battery case 1 is covered with an outer packaging label 8.

The positive electrode 2, the separator 4, and the gelled negative electrode 3 each include an alkaline electrolyte. The alkaline electrolyte is, for example, an aqueous solution of potassium hydroxide. The concentration of potassium hydroxide in the electrolyte is preferably 30 to 40 mass%. The electrolyte may further include zinc oxide. The concentration of the zinc oxide in the electrolyte is preferably 1 to 3 mass%.

The positive electrode 2 includes at least manganese dioxide as a positive electrode active material. The positive electrode 2 comprises, for example, a mixture of the manganese dioxide, a conductive agent, and the alkaline electrolyte. For the conductive agent, graphite powder is used.

The gelled negative electrode 3 may include zinc, a zinc alloy, or the like as the negative electrode active material. The gelled negative electrode 3 includes, for example: a gelled electrolyte comprising the alkaline electrolyte and a gelling agent added thereto; and the negative electrode active material in powder form dispersed in the gelled electrolyte. For the gelling agent, for example, sodium polyacrylate is used.

The gasket 5 is obtained, for example, by molding nylon or polypropylene into a predetermined size and shape by injection molding. The opening portion of the battery case 1 is crimped to the peripheral portion (flange portion) of the negative terminal plate 7, with the gasket 5 interposed between the opening portion and the plate. As such, the opening portion of the battery case 1 is sealed.

### [Examples]

In the following, an embodiment of the present invention will be specifically described by way of Examples. The present invention is not limited to the following embodiment, and can be altered and modified as appropriate within the scope of achieving the effects of the present invention. Furthermore, combination with other embodiments is also possible.

### Step (1): Production of manganese dioxide

In an electrolytic bath having an internal volume of 20 liters and provided with a warming device, a titanium plate serving as an anode and a carbon plate serving as a cathode were positioned to face each other. The electrolytic bath prepared as above was also provided with a tube for feeding a manganese sulfate solution (electrolytic feed solution) into the electrolytic bath from above.

The temperature of the electrolytic bath was maintained at 95ºC. Into this electrolytic bath, the manganese sulfate solution was injected and the composition of the electrolyte was maintained such that the concentrations of bivalent manganese and sulfuric acid were 40 g/l and 55 g/l, respectively Under the above condition, an electrolysis process, i.e., a cycle comprising electrolysis at a current density of 30 A/m² for 55 minutes, followed by a rest time of 5 minutes, was repeated.

After the foregoing electrolysis was carried out for 14 days, the titanium anode plate onto which manganese dioxide was deposited and attached was taken out and washed with pure water. Thereafter, the manganese dioxide on the titanium anode plate was separated from the plate. The mass of the manganese dioxide obtained, being about 10 cm square, was washed with hot water of 80 to 90ºC with use of a drum washer, thereby to wash off fine particles that were attached to the surface of the manganese dioxide.

The washed mass was dried with a drier in which the temperature was maintained at 60 to 80ºC. Then, the mass was ground into coarse particles of about 10 mm, which were further ground into fine particles with a roller mill. The fine particles obtained were washed with water, neutralized, and then passed through a filter. After filtration, the manganese dioxide was preliminarily dried; and then placed and dried in a pneumatic conveying dryer provided with a cyclone and a bag filter which served as collecting devices. Then, powder collected by the cyclone and fine particles collected by the bag filter were mixed at a predetermined ratio, and the resultant mixture was mixed and stirred with a Nauta mixer. In this manner, each powder of the manganese dioxide having a predetermined proportion of fine particles with a particle size of 0.5 µm or less and a predetermined peak intensity ratio I_{β}/I_{γ} as shown in Table 2, was prepared.

In each of the Examples, the manganese dioxide was produced under the condition of causing fluctuation in the electrolytic current during electrolysis. Furthermore, the peak intensity ratio I_{β}/I_{γ} was adjusted by bringing variation to the proportion of the particles with a particle size of 0.5 µm or less. However, production and adjustment are not limited to the above manner.

### Step (2): Production of positive electrode

To the manganese dioxide powder (maximum particle size: 150 µm) obtained in the Step (1), graphite powder (average particle size: 8 µm) serving as a conductive agent was added, thereby to obtain a mixture. The mass ratio between the manganese dioxide powder and the graphite powder was 92.4 : 7.6. An alkaline electrolyte was added to the mixture, followed by sufficient stirring; and then, the resultant was compression molded into flakes, thereby to obtain a positive electrode material mixture. The mass ratio between the resultant mixture and the alkaline electrolyte was 100 : 1.5. For the alkaline electrolyte, an aqueous alkaline solution containing 35 mass% of potassium hydroxide and 2 mass% of zinc oxide was used. Note that the average particle size D50 of the respective manganese dioxide powders used in Examples 1 to 6 was 26 to 40 µm.

The flakes of the positive electrode material mixture were pulverized into granules, which were then passed through a sieve. The granules with a mesh size of 10 to 100 were molded into a hollow, cylindrical shape by application of a fixed pressing force of 3 tons, thereby to produce a positive electrode pellet (outer diameter: 13.5 mm, inner diameter: 9.2 mm, height: 22.2 mm) with a fixed volume. The filling amount of 2 positive electrode pellets (corresponding to 1 battery) with the fixed volume, produced by application of the fixed pressing force, is shown in Table 2.

### Step (3): Production of negative electrode

Zinc alloy powder serving as a negative electrode active material, the foregoing alkaline electrolyte, and a gelling agent were mixed at a mass ratio of 200 : 100 : 2.1, thereby to obtain a gelled negative electrode 3. For the zinc alloy, a zinc alloy containing 0.02 mass% of indium, 0.01 mass% of bismuth, and 0.005 mass% of aluminum was used.

### Step (4): Assembling of alkaline dry battery

Vamiphite available from Nippon Graphite Industries, Ltd. was applied to the inner surface of a bottom-closed cylindrical battery case of nickel-plated steel plate to form a carbon coating having a thickness of about 10 µm, thereby to obtain a battery case 1. Two positive electrode pellets, each produced in the manner of the Step (2), were inserted in the battery case 1; and then, pressure was applied to the resultant, thereby to form a positive electrode 2 in contact with the inner surface of the battery case 1. A bottom-closed cylindrical separator 4 was disposed on the inner side of the positive electrode 2; and then, 1.50 g of an alkaline electrolyte as in the Step (2) was injected for impregnation of the separator 4 therewith. The resultant was allowed to stand for 15 minutes, thereby to allow the alkaline electrolyte in the separator 4 to permeate into the positive electrode 2. Thereafter, 6.00 g of the gelled negative electrode 3 obtained in the Step (3) was filled in the inner side of the separator 4. Then, the opening portion of the battery case 1 was sealed with a sealing unit 9 being an integration of a gasket 5, a negative electrode current collector 6, and a negative terminal plate 7; and then the outer surface of the battery case 1 was covered with an outer packaging label 8, thereby to obtain a predetermined alkaline dry battery.

### Evaluation (A): Evaluation on high-load discharge characteristics

The alkaline dry battery obtained was allowed to stand still for 7 days at room temperature. Thereafter, a discharge test was carried out under the following conditions. The battery was discharged at 1500 mW for 2 seconds in a 20±1ºC environment, and then discharged at 650 mW for 28 seconds. The above, regarded as one pattern, was repeated 10 times for a total of 5 minutes, followed by a rest time of 55 minutes. This 1 hour process was regarded as 1 cycle, and the number of cycles required for the closed circuit voltage of the battery to reach 1.05 V was counted. This counting was carried out on 5 alkaline dry batteries, and then the average of the results was calculated, thereby to obtain an evaluation on high-load discharge characteristics.

The peak intensity ratio I_{β}/I_{γ} was calculated in the foregoing manner.

By carrying out the foregoing Steps (1) to (4), respective AA alkaline dry batteries for Examples 1 to 6 and Comparative Examples 1 and 2 were produced, and evaluations were made. The results are shown in Table 2. The Raman scattering spectrum of the manganese dioxide used in Example 3 is shown in Fig. 1.

**[Table 2]**

| | Proportion of particles with particle size of 0.5 µm or less (vol%) | Peak intensity ratio I_{β}/I_{γ} | Filling amount of positive electrode pellets (g) | High-load discharge performance (number of cycles) |
|---|---|---|---|---|
| Ex. 1 | 0.8 | 0.35 | 9.99 | 140 |
| Ex. 2 | 1.2 | 0.38 | 10.01 | 140 |
| Ex. 3 | 2.3 | 0.46 | 10.01 | 135 |
| Ex. 4 | 3.0 | 0.53 | 9.99 | 131 |
| Ex. 5 | 3.8 | 0.58 | 10.02 | 125 |
| Ex. 6 | 5.0 | 0.62 | 9.99 | 100 |
| Comp.Ex.1 | 6.2 | 0.64 | 9.98 | 84 |
| Comp.Ex.2 | 7.5 | 0.64 | 10.00 | 82 |

As evidenced in Table 2, it was observed that the peak intensity ratio I_{β}/I_{γ} tended to become smaller, as the proportion of the fine particles with a particle size of 0.5 µm or less in the manganese dioxide powder was made smaller.

Regarding the respective batteries of Examples 1 to 6 which used the manganese dioxide with the peak intensity ratio I_{β}/I_{γ} of 0.62 or less, there was clearly more improvement in the high-load discharge performance, compared to the respective batteries of Comparative Examples 1 and 2 which used the manganese dioxide with the peak intensity ratio I_{β}/I_{γ} of 0.64. Particularly, the respective batteries of Examples 1 to 5 which used the manganese dioxide with the peak intensity ratio I_{β}/I_{γ} of 0.35 to 0.58 exhibited further improvement in high-load discharge performance. That is, according to the alkaline dry battery of the present invention using the manganese dioxide with a smaller proportion of the β phase, it is evident that an effect of improvement in high-load discharge characteristics is obtained. From the results of Example 1 (I_{β}/I_{γ} = 0.35) and Example 2 (I_{β}/I_{γ} = 0.38), the effect of improvement in high-load discharge characteristics presumably reaches a point of saturation when the peak intensity ratio I_{β}/I_{γ} is around 0.35.

The following is an observation relating to the filling ability of the positive electrode pellets. Regarding the respective batteries of Examples 1 to 6 which used the manganese dioxide with the peak intensity ratio I_{β}/I_{γ} of 0.62 or less, when the positive electrode pellets of the same size were molded by application of a fixed pressing force, the positive electrode material mixture was able to be filled therein in an amount approximately the same as in Comparative Examples 1 and 2. That is, even with a smaller proportion of the β phase in the manganese dioxide, there was evidently no great change in crystallinity, nor reduction in the filling ability of the positive electrode pellet.

### [Industrial Applicability]

The alkaline dry battery using the manganese dioxide of the present invention has excellent high-load discharge characteristics, and is therefore suited for use in devices with high current consumption.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 1: battery case
- 2: positive electrode
- 3: negative electrode
- 4: separator
- 5: gasket
- 6: negative electrode current collector
- 7: negative terminal plate
- 8: outer packaging label
- 9: sealing unit

## Claims

1. Manganese dioxide having a peak intensity ratio between a peak intensity I_{β} in a vicinity of 525 cm⁻¹ and a peak intensity I_{γ} in a vicinity of 580 cm⁻¹: I_{β}/I_{γ} of 0.62 or less, when measured by Raman scattering spectroscopy.

2. The manganese dioxide in accordance with claim 1, wherein the peak intensity ratio I_{β}/I_{γ} is 0.35 to 0.58.

3. The manganese dioxide in accordance with claim 1 having a particle size distribution in which a proportion of particles with a particle size of 0.5 µm or less, is 5 vol% or less.

4. The manganese dioxide in accordance with claim 1 having a particle size distribution in which a proportion of particles with a particle size of 0.5 µm or less, is 1.2 to 3.8 vol%.

5. An alkaline dry battery comprising:
a cylindrical positive electrode having a hollow, the positive electrode including the manganese dioxide in accordance with any one of claims 1 to 4 as a positive electrode active material,
a gelled negative electrode including a negative electrode active material filled in the hollow of the positive electrode,
a separator disposed between the positive electrode and the gelled negative electrode,
a negative electrode current collector inserted in the gelled negative electrode,
a negative terminal plate electrically connected to the negative electrode current collector, and
an electrolyte.
